# EUROPÄISCHE PATENTSCHRIFT

(11) **EP 1 939 483 B1**
(45) Veröffentlichungstag und Bekanntmachung des Hinweises auf die Patenterteilung: **30.07.2014**
(21) Anmeldenummer: 07124066.7
(22) Anmeldetag: 25.12.2007
(51) Int. Cl.: H01F 7/16, F16D 65/14, H01F 5/02, H01F 27/30, F16D 121/22

(54) **Spulenträger für den Elektromagneten einer elektromagnetischen Bremse, Elektromagnet, elektromagnetische Bremse, Verfahren zur Herstellung eines Elektromagneten, Seilwinde**
Spool carrier for the electromagnet of an electromagnetic brake, electromagnet, electromagnetic brake, method for manufacturing an electromagnet, winch
Support de bobine pour l'électroaimant d'un frein électromagnétique, électroaimant, frein électromagnétique, procédé de fabrication d'un électroaimant, treuil à câble

(30) Priorität: 27.12.2006 DE 10662302
(43) Veröffentlichungstag der Anmeldung: 02.07.2008
(73) Patentinhaber: PINTSCH BAMAG Antriebs- und Verkehrstechnik GmbH, 46537 Dinslaken (DE)
(72) Erfinder: Vajic, Ivica, 42655 Solingen (DE)
(74) Vertreter: CBDL Patentanwälte

(56) Entgegenhaltungen:
- EP-A- 0 521 840
- EP-A- 1 361 588
- DE-A1- 2 139 510
- DE-A1- 19 834 093
- GB-A- 2 268 987
- US-A- 3 244 944
- US-A- 3 753 182

## Beschreibung

### TECHNISCHES GEBIET DER ERFINDUNG

Die Erfindung betrifft einen Elektromagneten für eine elektromagnetische Federdruckbremse sowie einen mit einem solchen Spulenträger versehenen Elektromagneten, eine mit einem solchen Elektromagneten versehene elektromagnetische Bremse, ein Verfahren zur Herstellung eines solchen Elektromagneten sowie eine Seilwinde mit einer solchen elektromagnetischen Bremse.

### HINTERGRUND DER ERFINDUNG

Elektromagnete für ein elektromagnetisches Stellglied wie insbesondere eine elektromagnetische Bremse besitzen allgemein einen Anker, einen Magnetkörper aus einem magnetisierbaren Material und eine in dem Magnetkörper angeordnete Spule.

Auf dem Gebiet der Erfindung ist eine elektromagnetische Bremse bekannt, bei der eine Ankerscheibe mit Druckfedern gegen einen Reibbelagträger vorgespannt ist, damit ohne Stromzufuhr in den Elektromagneten der Bremse eine Bremswirkung sichergestellt ist. Dadurch kann bei Seilwinden, z.B. an Hebevorrichtungen, ein unkontrolliertes Abwinden im Falle eines Stromausfalls verhindert werden. Einschalten des Erregerstroms des Elektromagneten bewirkt, daß die Ankerscheibe den Reibbelagträger freigibt und die Bremse gelüftet ist.

Zur Fertigung werden bei Elektromagneten gemäß dem Stand der Technik Magnetspulen aufwendig in einen metallischen Magnetkörper eingebracht. Bei der Bremse gemäß dem Stand der Technik sichert eine Hinterschneidung der Ankerscheibe die Einbringung eines zum Abfallen der Ankerscheibe notwendigen Entmagnetisierungsluftspalts.

Die elektromagnetische Bremse des Standes der Technik umfaßt einen Elektromagneten mit einer Ankerscheibe, einen Reibbelag auf einem Reibbelagträger, Druckfedern und einen Träger, wobei der Reibbelagträger, die Ankerscheibe und der Träger derart miteinander verbunden sind, daß ein Gegeneinanderdrücken der Ankerscheibe und des Reibbelagträgers durch die Druckfedern sichergestellt ist.

Dokument EP 0521840 A2 offenbart einen Elektromagneten gemäß dem Oberbegriff des Anspruchs 2.

### OFFENBARUNG DER ERFINDUNG

Aufgabe der Erfindung ist es, eine elektromagnetische Bremse sowie einen Elektromagneten für eine elektromagnetische Federdruckbremse in kostengünstiger Weise bereitzustellen. Allgemeiner ist es Aufgabe der Erfindung, die Herstellung des Elektromagneten und der Bremse mit einem solchen Elektromagnet zu vereinfachen. Dazu schlägt die Erfindung einen Elektromagneten mit den Merkmalen des Anspruchs 1 vor.

Dazu sieht die Erfindung einen Elektromagneten vor mit einem Spulenträger mit einer Innenöffnung und einer der Innenöffnung abgewandten Außenfläche zum Aufwickeln einer Spule, wobei der Spulenträger an wenigstens einer seiner beiden Stirnseiten einen auskragenden Rand umfaßt mit Innenabmessungen, die den Abmessungen der Innenöffnung entsprechen und mit Außenabmessungen derart, daß der Rand über die Außenfläche zum Aufwickeln einer Spule hervorragt und der Spulenträger zwischen das Innen- und das Außenteil geklemmt ist.

Der erfindungsgemäße Elektromagnet besitzt einen Magnetkörper, der ein Innenteil aus einem magnetisierbaren Material und ein Außenteil aus einem magnetisierbaren Material mit einer Öffnung umfaßt, wobei das Innenteil in der Öffnung des Außenteils angeordnet ist und Innen- und Außenteile derart dimensioniert sind, daß ein Spalt zwischen dem Innenteil und dem Außenteil verbleibt.

Damit wird das Einbringen der Spule in den Magnetkörper zur Fertigung des Elektromagneten besonders einfach. Insbesondere wird im Gegensatz zum Stand der Technik eine Hinterschneidung der Ankerscheibe überflüssig, da das Innenteil einfach gegenüber dem Außenteil zurückversetzt angeordnet werden kann, um dadurch einen Luftspalt gegen eine Ankerscheibe des Elektromagneten zur Entmagnetisierung vorzusehen.

Die Fertigung des Elektromagneten erfolgt vorteilhaft durch
- Bereitstellen des Spulenträgers,
- Wickeln einer Spule auf den Spulenträger,
- Einsetzen des Innenteils eines Magnetkörpers des erfindungsgemäßen Elektromagneten in die Innenöffnung des Spulenträgers,
- Einklemmen des Spulenträgers in die Öffnung des Außenteils des Magnetkörpers.

Die Erfindung sieht auch eine elektromagnetische Bremse mit dem oben beschriebenen Elektromagneten darauf vor. Dabei ist die Ankerscheibe Teil des Ankers des Elektromagneten und die Innen- und Außenteile stehen mit einem abzubremsenden Teil, insbesondere einer Achse oder mit dem Reibbelagträger kraftschlüssig in Verbindung.

Die Bremse kann Teil einer Antriebseinheit mit einem Elektromotor sein, wobei insbesondere die abzubremsende Achse eine Antriebsachse des Elektromotors ist.

Vorteilhaft ist dabei ein Gehäuse der elektromagnetischen Bremse zum Anbau an ein Gehäuse des Elektromotors ausgebildet, was Nachrüsten und Wartung von Antriebseinheiten erleichtert.

Die Erfindung betrifft auch eine Seilwinde mit der oben beschriebenen elektromagnetischen Bremse. Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER ZEICHNUNGEN

- Fig. 1a: zeigt schematisch den Magnetkörper mit der Anordnung von Innen- und Außenteilen.
- Fig. 1b: zeigt eine Schnittansicht des Außenteils des Magnetkörpers der Fig. 1a entlang der Line A-C in Fig. 1a.
- Fig. 1c: zeigt eine Schnittansicht des Innenteils des Magnetkörpers der Fig. 1a entlang der Line D-E in Fig. 1 a.
- Fig. 2a: zeigt eine Perspektivansicht eines.
- Fig. 2b: zeigt eine Schnittansicht des Spulenträgers der Fig. 2a durch eine Symmetrieachse parallel zu den Stirnseiten des Spulenträgers.
- Fig. 2c: zeigt eine Schnittansicht des Spulenträgers der Fig. 2a, wobei der Schnitt tangential zur der Oberfläche für eine Wicklung zwischen den auskragenden Rändern gemacht ist.
- Fig. 2d: zeigt im Detail die Nut des Spulenträgers der Fig. 2a.
- Fig. 3: zeigt schematisch eine Bremse gemäß der Erfindung mit Spulenträger der Fig. 2a und Magnetkörper der Fig. 1a als Teile eines Elektromagneten.

### BESCHREIBUNG EINER BEVORZUGTEN AUSFÜHRUNGSFORM

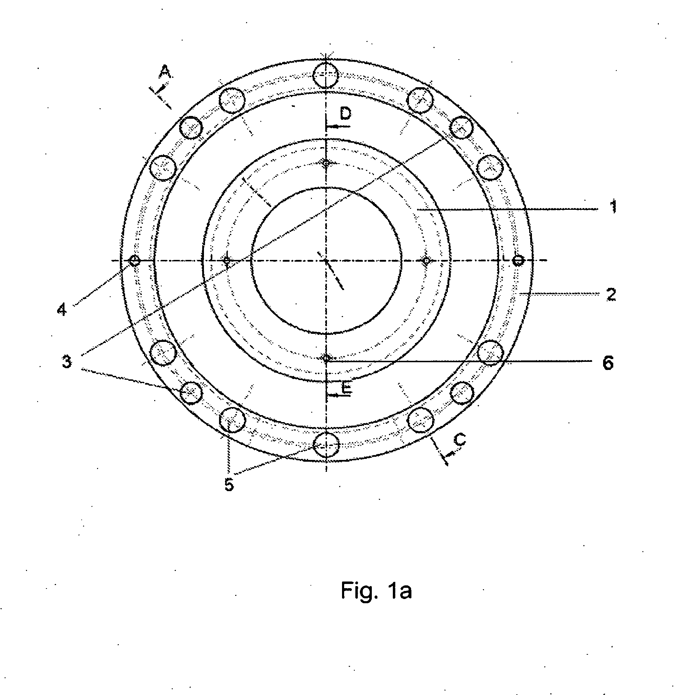

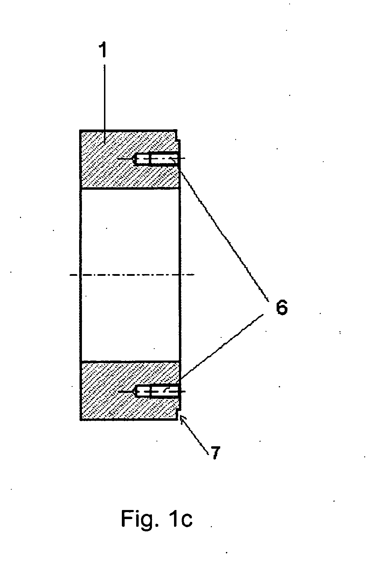

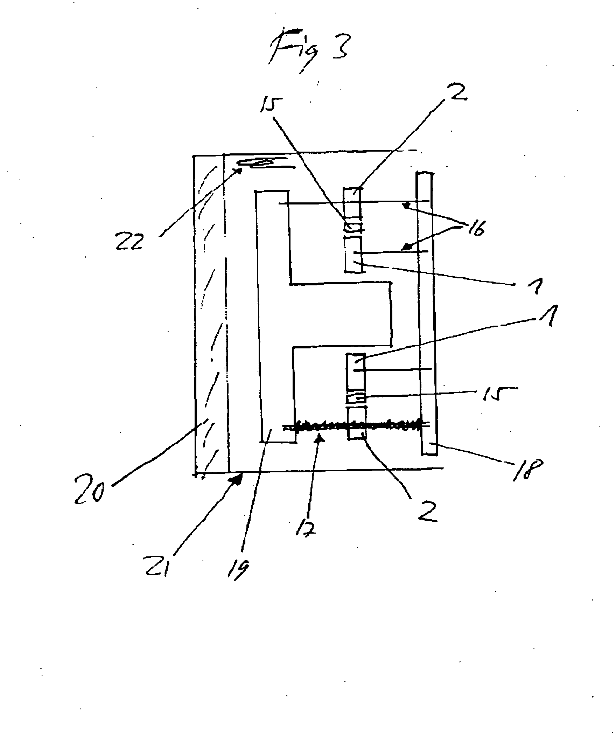

Der in Fig. 1a bis 1c gezeigte Magnetkörper besteht aus einem ringförmigen Innenteil 1 und einem ringförmigen Außenteil 2 und ist bei der in Fig. 3 gezeigten Bremse ohne eine Führungspassung zusammengesetzt und mit einem Anschlußflansch 18 verschraubt. Dabei stellt das ringförmige Innenteil 1 den Innenpol dar, und das ringförmige Außenteil 2 bildet den Außenpol des gesamten Magnetkörpers. Bei der Ausführung des Magnetkörpers werden Federdurchtrittslöcher 5 lediglich auf dem Außenteil 2 eingebracht. Das Innenteil 1 bleibt im Polbereich frei von Bohrungen.

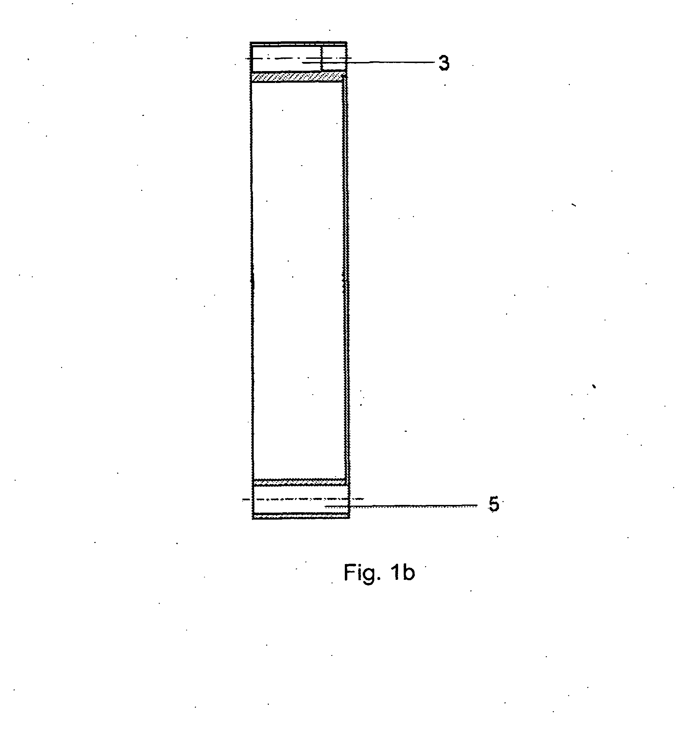

Zusätzlich zu den Federdurchtrittslöchern 5 werden auf dem Außenteil 2 die Bolzenlöcher 3 und Innengewinde 4 von zwei Lüftschrauben untergebracht. Der zum Abfallen der Ankerscheibe erforderliche Entmagnetisierungsluftspalt wird nur am Innenteil 1 des Magnetkörpers eingebracht. Der Innenteil 1 hat eine Eindrehung 7. Die Bohrungspassung der Bolzenlöcher 3 ist ausreichend groß ausgeführt wird, damit sich Bolzen unter Einwirkung einer Zugkraft auf ihrer ganzen Länge ausdehnen können und ein mit hohem Kraftaufwand verbundenes Einpressen von Bolzen in die Bohrung der Bolzenlöcher 3 unnötig ist. Die Bolzen 16 können mit groß ausgeführter Passung ohne großen Kraftaufwand in die Bohrung gleiten und durch eine entsprechend angeglichene Senkungsbohrung durch das Ausnutzen einer Keilwirkung auf einen festen Sitz gebracht werden. Dazu zeigt das Bolzenloch 3 in Fig. 1b zwei unterschiedlich große Innendurchmesserbereiche.

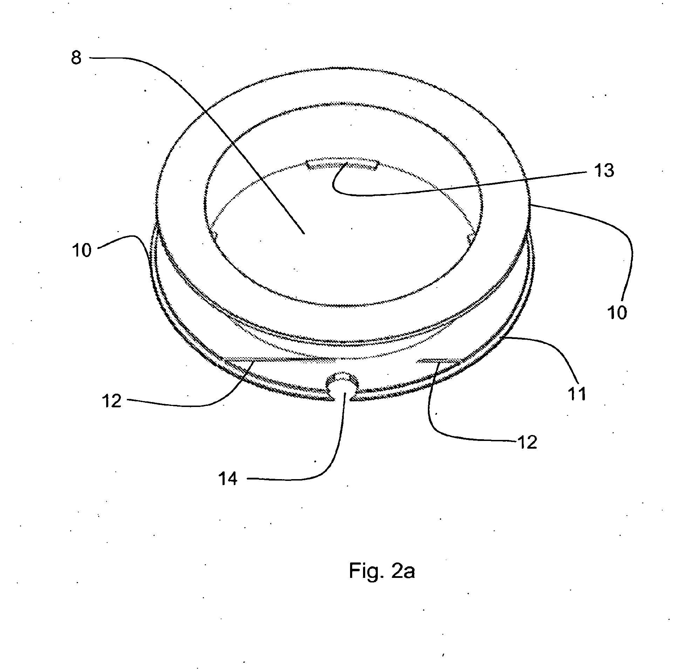

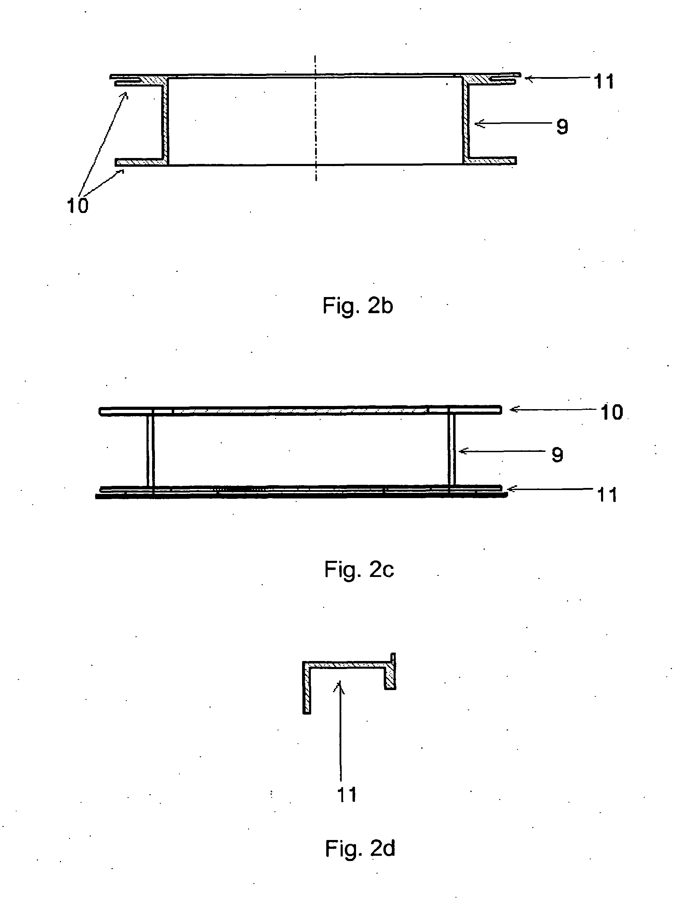

Eine Magnetspule wird auf den in Fig. 2a bis 2d gezeigten Spulenträger 15 aufgewickelt. Die Magnetspule ist aus Gründen der Übersichtlichkeit nicht dargestellt. Der Spulenträger ist ein einstückiger Kunststoffträger.

Die Wicklung der Magnetspule ist dabei unmittelbar auf Außenfläche zum Aufwickeln einer Spule 9 des Kunststoffträgers zwischen seinen auskragenden Rändern 10 aufgewickelt, nach Aufbringung einer geeigneten Verrutschsicherung (nicht dargestellt). Die Wicklung ist aus kostengünstigerem Einfachspulendraht mit Normalisolierung der Temperaturklasse H gefertigt. Die Ausführung des Kabelanschlusses der Magnetspule erfolgt über eine entsprechende senkrechte Durchgangsbohrung in axialer Richtung zum Zwischenflansch (nicht dargestellt). Die Wicklung ist fixiert durch Tränken in einer Polymerisiermasse und deren Aushärten auf dem Spulenträger. Innenteil 1 und der Außenteil 2 sind mit eingebrachten Bolzen 16 mit einem Anschlußflansch 18 verschraubt, wie in Fig. 3 schematisch dargestellt. Der Anschlußflansch wird an einer zu bremsenden Achse, beispielsweise einem Ausgangsflansch eines Elektromotors einer Seilwinde befestigt. Die Befestigungsschrauben greifen dabei in Innengewinde der Bolzen. Der Abstand zwischen Außendurchmesser Spule und Innendurchmesser des ringförmigen Außenteils 2 ist so groß, daß die Spannungsfestigkeit gegen elektrische Überschläge gegeben ist.

Der mit einer Nut versehene auskragende Rand 10 des Spulenträgers ist derart ausgeführt, daß durch einen größeren Außendurchmesser und spezielle Eindrehungen im Innen- 1 und Außenteil 2 eine Klemmwirkung ausgenutzt wird. Diese dient zur mechanischen Fixierung des Kunststoffträgers bei aufgewickelter Magnetspule. Der Kunststoffträger ist so gestaltet, daß auf der Bodenseite ein Hohlraum zwischen zwei Rändern vorhanden ist, der den notwendigen Freiraum zum Anlöten von Anschlußlitzen der Magnetspule aufweist.

Zum Heranführen des Magnetspulendrahtes an die Innenkante des Trägers wird ein schräger Einschnitt 12 eingebracht, der in eine Einkerbung 14 zwischen den zwei Rändern 10 mündet und eine Magnetspulenlitze bildet, ohne das Aufwickeln der Magnetspule zu behindern.

Fig. 3 zeigt eine elektromagnetische Federdruckbremse die den Zweck erfüllt, die Drehbewegung einer Antriebswelle abzubremsen. Eine Ankerscheibe 19, ist durch Magnet- und Federkräfte bewegbar. Die Federkraft drückt die Ankerscheibe gegen den Reibbelag auf einem Reibbelagträger 20, der an einem Gehäuse 21 der Bremse befestigt ist. Die Magnetkraft des Elektromagneten wirkt der mechanischen Kraft von Federn 17 entgegen, die durch das Außenteil 2 verlaufen und den Anschlußflansch 18 und die Ankerscheibe 19 beabstanden. In Fig. 3 ist nur eine Feder aus Gründen der Übersichtlichkeit dargestellt. Die Magnetspule dient dazu, durch elektromagnetische Induktion die Kraft der Federn 17 zu überwinden, d.h. die Ankerscheibe 19 in Richtung des Magnetkörpers zu bewegen.

Die Ankerscheibe 19 ist verschiebbar auf Bolzen 16 gelagert, die gleichzeitig das Außenteil 2 mit dem Anschlußflansch 18 verbinden. Ein Reibbelag (nicht dargestellt) ist durch Klebung auf den Reibbelagträger 20 fixiert, so daß durch die Federkraft beim Abfallen der Ankerscheibe infolge von Reibung ein Bremsmoment übertragen wird. Beim Reibbelagträger wird antimagnetisches Material eingesetzt. Das Gehäuse ist über den Anschlußflansch 18 zentriert. Das Gehäuse hat vorteilhaft eine Anbaumöglichkeit für einen seitlich angebrachten Anschlußkasten, eine Tachoanbaumöglichkeit, einen Zugang für eine Notlüftung und zwecks Verschleißüberprüfung Scheibenöffnungen sowie eine Transport-Öse oder eine Augenschraube.

Zur Vermeidung von Schwitzwasser innerhalb der Bremse ist die Bremse durch das Einbringen eines Heizdrahtes 22 beheizt. Der Heizdraht wird durch eine selbe Ein- und Ausführung wie auch der Wickeldraht der Magnetspule axial in die Bremse eingebracht. Die erforderliche Heizleistung der Bremse steht in Abhängigkeit zur Heizdrahtlänge und muß entsprechend ermittelt werden. Der Heizdraht wird in eine speziell dafür ausgelegte Nut gelegt. Beide Leitungsenden des Heizdrahtes werden mit weiterführenden Anschlußadern verlötet und können wie auch Anschlußadern der Magnetspule zu einem Motorklemmbrett geführt werden.

### Bezugszeichenliste

- 1: Innenteil
- 2: Außenteil
- 3: Bolzenloch
- 4: Innengewindebohrung
- 5: Federdurchtrittsloch
- 6: Innengewindebolzenloch
- 7: Eindrehung
- 8: Innenöffnung
- 9: Außenfläche zum Aufwickeln einer Spule
- 10: auskragender Rand
- 11: Nut
- 12: Einschnitt
- 13: Vorsprung
- 14: Einkerbung
- 15: Spulenträger
- 16: Bolzen
- 17: Feder
- 18: Anschlußflansch
- 19: Ankerscheibe
- 20: Reibbelagträger
- 21: Gehäuse
- 22: Heizdraht

## Patentansprüche

1. Elektromagnet für eine;elektromagnetische Federdruckbremse mit einem Anker (19), einem Magnetkörper aus einem magnetisierbaren Material, einem Spulenträger (15) aus Kunststoff und einer in dem Magnetkörper angeordneten Spule,
- wobei der Spulenträger (15) eine Innenöffnung (8), eine der Innenöffnung (8) abgewandte Außenfläche zum Aufwickeln einer Spule und zwei Stirnseiten aufweist,
- wobei der Magnetkörper ein Innenteil (1) aus einem magnetisierbaren Material und ein Außenteil (2) aus einem magnetisierbaren Material mit einer Öffnung umfaßt,
- wobei das Innenteil (1) in der Öffnung des Außenteils (2) angeordnet ist,
- wobei das Innen (1) und das Außenteil (2) derart dimensioniert sind, daß ein Spalt zwischen dem Innenteil (1) und dem Außenteil (2) verbleibt.
**dadurch gekennzeichnet,**
- **daß** der Spulenträger (15) an wenigstens einer seiner beiden Stirnseiten einen auskragenden Rand (10) umfaßt mit Innenabmessungen, die den Abmessungen der Innenöffnung (8) entsprechen, und mit Außenabmessungen derart, daß der Rand (10) über die Außenfläche (9) zum Aufwickeln einer Spule hervorragt und der Spulenträger (15) zwischen das Innen- (1) und das Außenteil (21) geklemmt ist.

2. Elektromagnet nach Anspruch 1, **dadurch gekennzeichnet, daß** wenigstens an einer Stirnseite des Spulenträgers (15) wenigstens ein Vorsprung (13) in Richtung der Innenöffnung (8) des Spulenträgers (15) vorgesehen ist und/oder daß wenigstens einer der auskragenden Ränder (10) eine Einkerbung (14) zu der Innenöffnung (8) des Spulenträgers (15) hin aufweist.

3. Elektromagnet nach Anspruch 1 oder 2, **dadurch gekennzeichnet, daß** das Außenteil (2) und/oder das Innenteil (1) stirnseitig Durchgangsbohrungen, Blindlöcher und/oder Innengewinde aufweisen, wobei vorzugsweise zumindest einige der Durchgangsbohrungen und/oder der Blindlöcher konisch ausgeführt sind.

4. Elektromagnetische Bremse umfassend
- einen Elektromagneten mit einer Ankerscheibe (19),
- einen Reibbelag auf einem Reibbelagträger (20),
- Druckfedern (17) und
- einen Träger, vorzugsweise in Form eines Gehäuses (21) für die elektromagnetische Bremse,
- wobei der Reibbelagträger (20), die Ankerscheibe (19) und der Träger (21) derart miteinander verbunden sind, daß ein Gegeneinanderdrücken der Ankerscheibe (19) und des Reibbelagträgers (20) durch die Druckfedern (17) sichergestellt ist,
**gekennzeichnet durch**
- einen Elektromagneten nach einem der Ansprüche 1 bis 3.

5. Elektromagnetische Bremse nach Anspruch 4, **dadurch gekennzeichnet, daß** die Ankerscheibe (19) über Bolzen in Bohrungen und/oder Blindlöchern in dem Außenteil (2) mit variablem Abstand zu dem Außenteil (2) verschieblich gelagert ist.

6. Verfahren zur Herstellung eines Elektromagneten für eine elektromagnetische Bremse nach einem der Ansprüche 4 oder 5,
**gekennzeichnet durch** die Schritte:
- Bereitstellen eines Spulenträgers (15),
- Wickeln einer Spule auf den Spulenträger (15),
- Einsetzen des Innenteils (1) eines Magnetkörpers des Elektromagneten nach einem der Anspruche 1 bis 3 in die Innenöffnung (8) des Spulenträgers (15),
- Einklemmen des Spulenträgers (15) in die Öffnung des Außenteils (2) des Magnetkörpers.

7. Seilwinde mit einer elektromagnetischen Bremse nach einem der Ansprüche 4 oder 5.

## Claims

1. An electromagnet for an electromagnetic spring pressure brake comprising an armature (19), a magnet body consisting of a magnetizable material, a coil support (15) made of plastic and a coil, which is arranged in the magnet body,
- wherein the coil support (15) encompasses an inner opening (8), an outer surface, which faces away from the inner opening (8), for winding up a coil, and two front sides,
- wherein the magnet body comprises an inner part (1) made of a magnetizable material and an outer part (2) made of a magnetizable material comprising an opening,
- wherein the inner part (1) is arranged in the opening of the outer part (2),
- wherein the inner part (1) and the outer part (2) are dimensioned such that a gap remains between the inner part (1) and the outer part (2),
**characterized in**
- **that** the coil support (15) comprises an overhanging edge (10) on at least one of its two front sides, comprising inner dimensions, which correspond to the dimensions of the inner opening (8), and comprising outer dimensions such that the edge (10) projects beyond the outer surface (9) for winding up a coil and the coil support (15) is clamped between the inner part (1) and the outer part (2).

2. The electromagnet according to claim 1, **characterized in that** provision is made at least at one front side of the coil support (15) for at least one projection (13) in the direction of the inner opening (8) of the coil support (15) and/or that at least one of the overhanging edges (10) encompasses a notch (14) towards the inner opening (8) of the coil support (15).

3. The electromagnet according to claim 1 or 2, **characterized in that** the outer part (2) and/or the inner part (1) encompass through holes, blind holes and/or internal threads on the front side, wherein at least some of the through holes and/or blind holes are preferably embodied so as to be conical.

4. An electromagnetic brake comprising
- an electromagnet comprising an armature disk (19),
- a friction lining on a friction lining support (20),
- compression springs (17) and
- a support, preferably in the form of a housing (21), for the electromagnetic brake,
- wherein the friction lining support (20), the armature disk (19) and the support (21) are connected to one another such that it is ensured that the armature disk (19) and the friction lining support (20) are pressed against one another by means of the compression springs (17),
**characterized by**
- an electromagnet according to one of claims 1 to 3.

5. The electromagnetic brake according to claim 4, **characterized in that** the armature disk (19) is supported via bolts in boreholes and/or blind holes in the outer part (2) so as to be displaceable at a variable distance to the outer part (2).

6. A method for producing an electromagnet for an electromagnetic brake according to one of claims 4 or 5,
**characterized by** the steps:
- providing a coil support (15),
- winding a coil onto the coil support (15),
- inserting the inner part (1) of a magnet body of the electromagnet according to one of claims 1 to 3 into the inner opening (8) of the coil support (15)
- clamping the coil support (15) into the opening of the outer part (2) of the magnet body.

7. A rope winch comprising an electromagnetic brake according to one of claims 4 or 5.

## Revendications

1. Electroaimant pour un frein à ressort électromagnétique, comprenant un induit (19), un corps magnétique en un matériau magnétisable, un support de bobine (15) en matière synthétique et une bobine disposée à l'intérieur dudit corps magnétique,
- ledit support de bobine (15) présentant une ouverture intérieure (8), une surface extérieure opposée à l'ouverture intérieure (8) et destinée à enrouler une bobine, ainsi que deux surfaces frontales,
- ledit corps magnétique comprenant une partie intérieure (1) en un matériau magnétisable et une partie extérieure (2) en un matériau magnétisable ayant une ouverture,
- ladite partie intérieure (1) étant disposée dans l'ouverture de la partie extérieure (2),
- lesdites parties intérieure (1) et extérieure (2) étant dimensionnées de telle manière qu'une fente reste entre la partie intérieure (1) et la partie extérieure (2),
**caractérisé par le fait**
- **que** ledit support de bobine (15) comprend sur au moins l'une de ses deux surfaces frontales un rebord (10) en saillie ayant des dimensions intérieures qui correspondent aux dimensions de ladite ouverture intérieure (8) et ayant des dimensions extérieures telles que ledit rebord (10) fait saillie au-delà de la surface extérieure (9) d'enroulement d'une bobine et que ledit support de bobine (15) est serré entre les parties intérieure (1) et extérieure (2).

2. Electroaimant selon la revendication 1, **caractérisé par le fait qu'**au moins une projection (13) en direction de ladite ouverture intérieure (8) du support de bobine (15) est prévue au moins sur une surface frontale du support de bobine (15), et/ou que l'un au moins des rebords (10) en saillie présente une échancrure (14) vers ladite ouverture intérieure (8) du support de bobine (15).

3. Electroaimant selon la revendication 1 ou 2, **caractérisé par le fait que** la partie extérieure (2) et/ou la partie intérieure (1) présente(nt), côté front, des trous débouchants, des trous borgnes et/ou des filets intérieurs, de préférence au moins quelques-uns des trous débouchants et/ou des trous borgnes étant réalisés de manière conique.

4. Frein électromagnétique comprenant :
- un électroaimant ayant un disque d'induit (19),
- une garniture de friction sur un support de garniture de friction (20),
- des ressorts à pression (17) et
- un support, de préférence sous forme d'un carter (21) pour le frein électromagnétique,
- ledit support de garniture de friction (20), ledit disque d'induit (19) et ledit support (21) étant reliés entre eux de telle manière qu'une action de plaquer l'un contre l'autre ledit disque d'induit (19) et ledit support de garniture de friction (20) est assurée par les ressorts à pression (17),
**caractérisé par**
- un électroaimant selon l'une quelconque des revendications 1 à 3.

5. Frein électromagnétique selon la revendication 4, **caractérisé par le fait que** ledit disque d'induit (19) est logé à déplacement par l'intermédiaire de boulons dans des trous et/ou trous borgnes dans la partie extérieure (2), à distance variable par rapport à la partie extérieure (2).

6. Procédé de fabrication d'un électroaimant pour un frein électromagnétique selon l'une quelconque des revendications 4 ou 5,
**caractérisé par** les étapes :
- fournir un support de bobine (15),
- enrouler une bobine sur ledit support de bobine (15),
- insérer la partie intérieure (1) d'un corps magnétique de l'électroaimant selon l'une quelconque des revendications 1 à 3, dans ladite ouverture intérieure (8) du support de bobine (15),
- serrer ledit support de bobine (15) dans ladite ouverture de la partie extérieure (2) du corps magnétique.

7. Treuil à câble comprenant un frein électromagnétique selon l'une quelconque des revendications 4 ou 5.
